(19) Europäisches Patentamt
European Patent Office
Office européen des brevets

(11) **EP 3 920 048 A1**

(12) **EUROPEAN PATENT APPLICATION**

(43) Date of publication:
**08.12.2021 Bulletin 2021/49**

(51) Int Cl.:
***G06F 16/583*** *(2019.01)* ***G06K 9/00*** *(2006.01)*
***G06K 9/46*** *(2006.01)*

(21) Application number: **20177857.8**

(22) Date of filing: **02.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Siemens Aktiengesellschaft**
**80333 München (DE)**

• **Ludwig-Maximilians-Universität**
**80539 München (DE)**

(72) Inventor: **The designation of the inventor has not yet been filed**

(74) Representative: **Maier, Daniel Oliver**
**Siemens AG**
**Postfach 22 16 34**
**80506 München (DE)**

(54) **METHOD AND SYSTEM FOR AUTOMATED VISUAL QUESTION ANSWERING**

(57) Automated visual question answering is achieved by generating a scene graph (SG) from an image (I), receiving a question (NLQ) of a user (U) in natural language, mapping the question to a graph query (GQ) on the scene graph, extracting a path in the scene graph that contains an answer to the graph query, and outputting the extracted path to the user. For example, the scene graph can be modeling semantic and/or spatial relationships between objects in the image. This approach exploits an underlying structure and interaction among objects in the image with respect to various questions, thus providing strong insight into the image as well as its graphical structure. The question answering task is modelled as a path-finding problem on scene graphs.

The underlying idea can be summarized with the phrase: Learn to walk to the correct answer. In particular, techniques from visual question answering and statistical relational learning are combined advantageously. The extracted path provides an inherent transparency mechanism. The gap between symbolic and sub-symbolic reasoning methods is bridged by combining explicit reasoning over symbolic entities with the flexibility of methods that fall under the representation learning paradigm. In other words, a novel approach that combines statistical relational learning with visual question answering is provided. This novel approach outperforms other solutions while being more interpretable. Also, it requires less annotation effort than other solutions.

FIG 5

**Description**

The invention relates to visual question answering, which is concerned with answering free-form questions about an image. It is an ambitious task that involves techniques from computer vision and natural language processing jointly. To answer an image related question, one needs to understand both the presented scene in the image and the question, link the entities from both modalities, and reason about their relations.

Visual Question Answering (VQA) is a demanding task that involves understanding and reasoning over two data modalities: images and natural language. Given an image and a free-form question, the task is to find the correct answer to the question based on the scene presented by the image. Heuristically speaking, successful VQA systems are required to possess the faculty of sight (processing the image), the faculty of hearing (processing the question), and the faculty of reason (derive the correct answer). A key challenge is to find an efficient representation of both data modalities that allows for complex reasoning.

Most existing VQA approaches are agnostic towards the relational structure of the object in the presented scene and rely solely on processing regional features separately. Other known techniques attempt to make VQA systems relation-aware by implicitly inferring interactions between objects in the scene by distributing co-attention to the question when processing the image, for example Jiasen Lu et al., "Hierarchical question - image co-attention for visual question answering", Advances in neural information processing systems, 2016. Further methods explicitly model semantic and spatial relationships, for example Damien Teney, Liu Lingqiao, and Anton van Den Hengel, "Graph-structured representations for visual question answering", in Proceedings of the IEEE Conference on Computer Vision and Pattern Recognition, 2017.

This can lead to a network representation of an image where nodes correspond to detected objects and labeled edges encode pairwise relations. Such structured, symbolic representations are called scene graphs and allow explicit reasoning to derive answers.

Knowledge graphs provide human readable, structured representations of knowledge about the real world via collections of factual statements. Machine learning methods for knowledge graph reasoning aim at exploiting statistical regularities in observed connectivity patterns. These methods are studied under the umbrella of statistical relational learning (SRL), see for example Maximilian Nickel et al., "A review of relational machine learning for knowledge graphs", in Proceedings of the IEEE 104.1, 2015, pp. 11-33. Knowledge graph embeddings have become the dominant approach in statistical relational learning. The underlying idea is that graph features that explain the connectivity pattern of knowledge graphs can be encoded in low-dimensional vector spaces. In the embedding spaces the interactions among the embeddings for entities and relations can be efficiently modelled to produce scores that predict the validity of a triple. Despite achieving good results in knowledge graph reasoning tasks, most embedding based methods cannot capture the compositionality expressed by long reasoning chains. This often limits their applicability in complex reasoning tasks.

It is an object of the invention to provide a method and system that provide an alternative to the state of the art.

According to the method for automated visual question answering, the following steps are executed:

- automatically capturing, by an image sensor, an image,
- automatically detecting, by an object detection algorithm executed by a processor, objects in the image,
- automatically generating, by a scene graph generation algorithm executed by the processor or another processor, a scene graph, wherein nodes in the scene graph correspond to detected objects and/or attributes of detected objects,
- receiving, by a user interface, a question of a user in natural language,
- automatically mapping, by the processor or another processor, the question to a graph query on the scene graph,
- automatically extracting, by a scene graph reasoning algorithm executed by the processor or another processor, a path in the scene graph that contains an answer to the graph query, and
- outputting, by the user interface, the extracted path and/or the answer to the user.

The system for automated visual question answering is capable of executing the method and comprises the processor, a computer-readable medium storing software components, including the object detection algorithm, the scene graph generation algorithm, and the scene graph reasoning algorithm, an image sensor, which is capable of capturing the image, and the user interface.

The following advantages and explanations are not necessarily the result of the object of the independent claims. Rather, they may be advantages and explanations that only apply to certain embodiments or variants.

For example, the scene graph can be modeling semantic and/or spatial relationships between the objects in the image.

The method and system, or at least some of their embodiments, exploit an underlying structure and interaction among objects in an image with respect to various questions, thus providing strong insight into the image as well as its graphical structure.

The method and system, or at least some of their embodiments, model the question answering task as a path-finding problem on scene graphs. The underlying idea can be summarized with the phrase: Learn to walk to the correct answer. In particular, techniques from visual question answering and statistical relational learning are combined advantageously.

The extracted path provides an inherent transparency mechanism, by explicitly capturing semantic and spatial relationships among objects in an iterative graphical interpretable way, similar to human perception and reasoning. The method and system, or at least some of their embodiments, bridge the gap between symbolic and sub-symbolic reasoning methods, by combining explicit reasoning over symbolic entities with the flexibility of methods that fall under the representation learning paradigm. In other words, a novel approach that combines statistical relational learning with visual question answering is provided. This novel approach outperforms other solutions while being more interpretable. Also, it requires less annotation effort than other solutions.

The method and system, or at least some of their embodiments, do not require rich semantic annotations of the questions in order to perform the reasoning step. This flexibility allows applications in real-world settings. Instead of relying on additional information, the question is mapped to the graph query. In other words, generic question embedding is passed to the scene graph reasoning algorithm.

The scene graph reasoning algorithm can be integrated with real-time sensors as node features to the scene graph, making it suitable for real-world, industrial settings.

In an embodiment of the method, the scene graph reasoning algorithm has been trained with reinforcement learning.

In another embodiment of the method, the image is a still image or a moving image.

In another embodiment of the method, the image sensor is mounted in an industrial system and monitoring the industrial system.

For example, the industrial system can be a manufacturing plant, a gas turbine or a train. The operator could query for certain events, the state of the equipment, or compliance with safety standards. Such a chatbot like systems centered around VQA (consists of visual and other sensors) can allow an operator to efficiently monitor the industrial system.

In another embodiment of the method, the user interface is equipped for speech recognition and/or speech generation.

In another embodiment of the method, the user interface provides a chatbot for receiving the question and outputting the extracted path and/or the answer in natural language.

In another embodiment of the method, the scene graph is augmented with information received from other image sensors and/or other types of sensors, in particular real-time sensors. As an alternative or in addition, the scene graph is generated from images of multiple image sensors. As an alternative or in addition, the scene graph is enriched with information from other sources.

Such a multi-sensor structural graph based VQA software can be advantageously employed to assist engineers during maintenance. Furthermore, it can provide integrated insights into the system in real-time. Other sources of information can be known specifications of objects, such as machine specifications, for example. Enriching the nodes in the scene graph with various features such as other signals or technical attributes of the corresponding objects allows for reasoning over multiple data modalities.

In another embodiment of the method, the scene graph reasoning algorithm is a statistical relational learning algorithm.

In another embodiment of the method, the scene graph reasoning algorithm is a multi-hop method, in particular a neural multi-hop method.

Multi-hop reasoning methods (also known as path-based methods) on knowledge graphs follow a different philosophy than embedding based methods. The underlying idea is to infer missing knowledge based on sequentially extended inference paths on the knowledge graph. In other words, an iterative reasoning technique is provided that naturally connects language to vision in a sequential way.

In another embodiment of the method, the scene graph reasoning algorithm is a reinforcement learning agent having been trained to autonomously navigate over the scene graph to extract the path in the scene graph that contains the answer to the graph query.

In other words, the reinforcement learning agent has been trained to extract predictive paths that allow to answer the question. In contrast to purely embedding-based approaches, this approach provides the explicit reasoning chains that lead to the derived answers.

In another embodiment of the method, the reinforcement learning agent has been trained to conduct a policy guided random walk on the scene graph until a conclusive inference path is obtained as the path in the scene graph that contains the answer to the graph query.

In another embodiment of the method, the policy of the reinforcement learning agent has been trained on multiple examples consisting of images, questions, and answers to the questions. During training, the reinforcement learning agent has received a positive reward when it was able to locate a correct answer node in a scene graph, and otherwise a negative reward.

In another embodiment of the method, a state and actions of the scene graph reasoning algorithm are represented by embedding the question as well as the nodes and their relations in the scene graph into vector spaces with d dimension. The embedded question is the graph query. In particular, words in the question and nodes and relations in the scene graph are initialized with GloVe embeddings, and graph attention networks are used to produce the final embeddings. In particular, in order to produce an embedding for the question, first a Transformer and then a mean pooling operation is applied.

In an embodiment of the system, the system additionally comprises a microphone, capable of receiving the question of the user in natural language, and a speaker, capable of outputting the extracted path and/or the answer to the user. The software components also include a speech recognition algorithm and a speech generation algorithm.

The computer-readable storage media have stored thereon instructions executable by one or more processors of a computer system, wherein execution of the instructions causes the computer system to perform the method.

The computer program is being executed by one or more processors of a computer system and performs the method.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following Figures:

Fig. 1    shows an image I captured by an image sensor,

Fig. 2    shows a scene graph SG of the image depicted in Fig. 1,

Fig. 3    shows a practical application of visual question answering,

Fig. 4    shows a virtual assistant VA capable of processing voice input, and

Fig. 5    shows a workflow according to an embodiment of the method.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

Inspired by multi-hop reasoning methods such as the MINERVA algorithm proposed by Rajarshi Das et al., "Go for a Walk and Arrive at the Answer: Reasoning Over Paths in Knowledge Bases using Reinforcement Learning", in ICLR, 2018; or Wenhan Xiong, Thien Hoang, and William Yang Wang, "DeepPath: A Reinforcement Learning Method for Knowledge Graph Reasoning", in Proceedings of the 2017 Conference on Empirical Methods in Natural Language Processing (EMNLP 2017), Copenhagen, Denmark, ACL, Sept. 2017, the following embodiments of the method and system model the question answering task as a path-finding problem on scene graphs. The underlying idea can be summarized with the phrase: Learn to walk to the correct answer. More specifically, given an image, we train a reinforcement learning agent to conduct a policy guided random walk on a scene graph until a conclusive inference path is obtained. In contrast to purely embedding-based approaches, this approach provides the explicit reasoning chains that lead to the derived answers.

The underlying idea of this multi-hop reasoning method is to train a reinforcement learning agent to perform a policyguided random walk until the answer entity to a query is reached. Thereby, the path finding problem of the agent can be modeled in terms of a sequential decision-making task framed as a Markov decision process (MDP). The following embodiments are based on the MINERVA algorithm in the sense that a reinforcement learning agent is trained to route on the scene graph to the correct answer node. However, in contrast to the following embodiments, the MINERVA algorithm is trained to navigate over large scale knowledge graphs exploiting repeating, statistical connectivity patterns and (fuzzy) rules. Moreover, instead of processing free-form questions, the MINERVA algorithm requires that the query in the knowledge graph reasoning setting is structured as a pair of symbolic entities. That is why the following embodiments introduce a wide range of modification to adjust the MINERVA algorithm to the challenging VQA setting.

The embodiments described in the following are based on three distinct stages and algorithms: scene graph generation, question processing, and scene graph reasoning.

Question processing takes a user defined free form question as input and employs a sequential question processing technique from NLP to produce a low-dimensional vector space embedding with respect to the generated scene graph. In other words, the question is automatically mapped to a graph query. The graph query is presented to a reinforcement learning agent. The agent explores the nodes and directed edges of the scene graph conditioned on the question and will give a path that leads to its answer. In particular, the path that the agent provides can serve as an interpretable justification of the prediction.

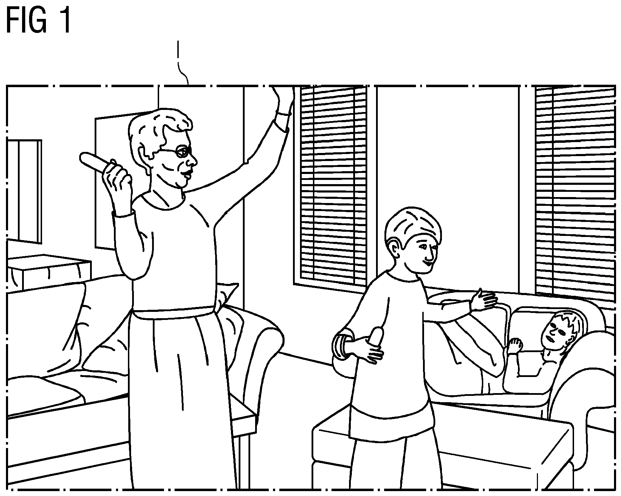

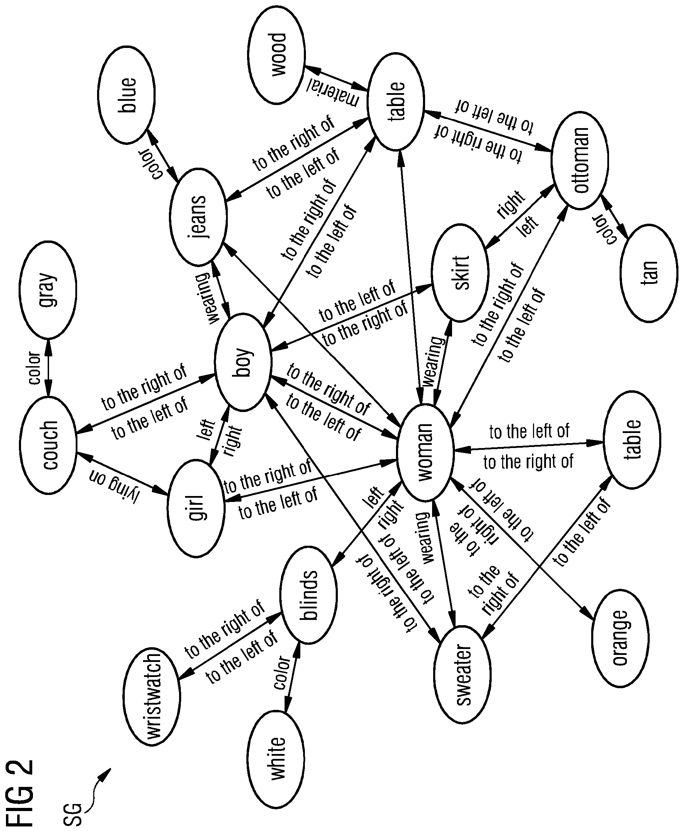

Fig. 1 shows an image I captured by an image sensor, and Fig. 2 a scene graph SG of the captured image.

In the following description, a scene graph SG is a directed multigraph where each node corresponds to a scene entity which is either an object associated with a bounding box or an attribute (such as the size or color) of an object. Each scene entity comes with a type that corresponds to the predicted object or attribute label. To ease the notation, we will identify scene entities with their predicted labels. The edge types specify how the scene entities are related to each other. More formally, let $\varepsilon$ denote the set of scene entities and consider the set of binary relations $\mathcal{R}$.

Then a scene graph $\mathcal{SG} \subset \mathcal{E} \times \mathcal{R} \times \mathcal{E}$ is a collection of ordered triples (*s,p,o*) - subject, predicate, and object.

For example, as shown in Fig. 1 and Fig. 2, a triple could be (*women, wearing, sweater*) indicating that both a woman (subject) and a sweater (object) are detected in the image I. The predicate *wearing* indicates the relation between the objects. Moreover, we denote with $p^{-1}$ the inverse relation corresponding to the predicate *p*. For the remainder of this work, we impose the completeness with respect to inverse relations in the sense that for every $(s, p, o) \in \mathcal{SG}$ it

is implied that $(o, p^{-1}, s) \in \mathcal{SG}.$ Moreover, we add a so-called hub node (*hub*) to every scene graph SG which is connected to all other nodes.

Scene graph generation can be accomplished according to methods known from the state of the art. For example, an object detection model can be trained that detects and classifies the objects in the image (e.g. man, bike). A suitable choice for the object detection would be the Mask R-CNN model, as described in Kaiming He, Georgia Gkioxari, Piotr Dollar, and Ross Girshick, "Mask R-CNN", in Proceedings of the IEEE international conference on computer vision, pp. 2961-2969, 2017. For example, we can start with an empty scene graph; for each detected object, we add a labeled node (e.g. a mannode, a bike-node) to the scene graph. For the relation prediction, we can add a generic edge for each pair of objects/nodes (e.g., an edge between man and bike) that are in close proximity in the image (e.g., less than 10% of the image dimension). Afterwards, a graph convolutional network as described in Thomas N. Kipf and Max Welling, "Semi-supervised classification with graph convolutional networks", arXiv preprint arXiv:1609.02907, 2016, can be used to classify the edges (man, rides_on, bike) and add the label to the scene graph.

Another option for scene graph generation is the Relation Transformer Network as described in Rajat Koner, Poulami Sinhamahapatra, and Volker Tresp, "Relation Transformer Network", arXiv preprint arXiv:2004.06193, 2020. It decomposes the generation process in three main stages: At first all detected objects (i.e., nodes) are contextualized based on their visual, spatial and semantic features, so that each node is aware of the presence of other nodes and the whole scene. Then an undirected edge or interaction among two nodes is computed based on the joint embedding of the two nodes and accumulating influence from other nodes. Finally, a relation or directed edge is predicted based on classifying the joint subject, object and their corresponding edge embedding.

After the scene graph generation, a question of a user is automatically mapped to a graph query on the scene graph. The goal of this question processing step is to produce a contextual vector space embedding of the question that can be employed as a graph query for the scene graph reasoning in the following step. In principle, many different NLP techniques are suitable for this task. For example, pretrained GloVe embeddings can be employed to produce embeddings for every word in the question followed by Transformers networks to produce a contextualized embedding vector, the question embedding q, with respect to the generated scene graph. The question embedding q is the graph query.

After mapping the question to the graph query, a scene graph reasoning algorithm automatically extracts a path in the scene graph that contains an answer to the graph query. The scene graph reasoning algorithm, which can be any kind of machine learning model or software module, is an essential part of the described embodiments.

In a possible implementation, the scene graph reasoning algorithm consists of a reinforcement learning agent that navigates on the scene graph until it reaches a queried object. More specifically, in a first step, the question embedding *q* is presented to the agent. The question embedding *q* serves as context information to the agent which performs a policy guided random walk on the scene graph until it reaches the node that corresponds to the answer of the question. An action at time t corresponds to the change of location of the agent from its current location, say $v \in V,$ to an adjacent node. Thereby, every transition of the graph is sampled according to a policy $\pi(N(v), h_t, q)$, where $h_t$ corresponds to an encoding of the path that the agent has already traversed (i.e., the history) and $N(v)$ denotes the neighborhood of v. The vector returned by $\pi(N(v), h_t, q)$ induces a probability distribution on the neighborhood of *v* from which the next transition is sampled. This procedure is iterated until the agent reaches its final location (i.e., the node that corresponds to the answer of the question).

The policy of the agent is trained on multiple examples which consist of images, questions, and answers to the questions. During training, the agent receives a positive reward when it was able to locate the answer node; in case it did not find the correct answer, it receives a negative reward. The policy is trained such that the sum of rewards during training is maximized. Thereby we employ the policy gradient algorithm REINFORCE as described in Ronald J. Williams, "Simple statistical gradient-following algorithms for connectionist reinforcement learning", Machine learning 8.3-4, 1992, pp. 229-256.

In the following, an even more detailed embodiment of the scene graph reasoning algorithm will be described.

The task of visual question answering is framed as a scene graph traversal problem. Starting from the hub entity that is connected to all other nodes, an agent is supposed to sequentially select transitions on the scene graph $\mathcal{SG}$ to a neighboring node until the node corresponding to the correct answer is reached. The transitions are added to the current path, extending the reasoning chain. The agent's decision problem is modelled via the fixed horizon Markov decision problem outlined below.

States:

The fully observable state space $\mathcal{S}$ is given by $\mathcal{E}^2$. Intuitively, we want the state to encode the location of the agent $e_t$ at time $t$ and the question $\mathcal{Q}$. Thus, a state $S_t \in \mathcal{S}$ for time $t \in \mathbb{N}$ is represented by $S_t = (e_t, \mathcal{Q})$.

Actions:

The set of available actions from a state $S_t$ is denoted by $\mathcal{A}_{S_t}$. It contains all out-going edges from the node $e_t$ and the corresponding target nodes. More formally, $\mathcal{A}_{S_t} = \{(r, e) \in \mathcal{R} \times \mathcal{E} : S_t = (e_t, \mathcal{Q}) \wedge (e_t, r, e) \in \mathcal{SG}\}$. Moreover, we denote with $A_t \in \mathcal{A}_{S_t}$ the action that the agent performed at time $t$. We include self-loops for each node in the scene graph $\mathcal{SG}$ such that the agent has the option to stay at the current location.

Environments:

The environments evolve deterministically by updating the state according to previous action. Formally, the transition function at time $t$ is given by $\delta_t(S_t, A_t) := (e_{t+1}, \mathcal{Q})$ with $S_t = (e_t, \mathcal{Q})$ and $A_t = (r, e_{t+1})$.

Embeddings:

In order to internally represent the state and actions, we embed both the question $\mathcal{Q}$ as well as the nodes and relations in the scene graph $\mathcal{SG}$ into vector spaces with $d$ dimension. Thereby, we initialize words in the question $\mathcal{Q}$ and entities and relations in the scene graph $\mathcal{SG}$ with GloVe embeddings, as described in Jeffrey Pennington, Richard Socher, and Christopher D. Manning, "GloVe: Global Vectors for Word Representation", in Empirical Methods in Natural Language Processing (EMNLP), 2014, pp. 1532-1543. Moreover, we employ graph attention networks (GAT), as described in Petar Velickovic et al., "Graph attention networks", in arXiv preprint arXiv:1710.10903, 2017. Extending the idea from graph convolutional network with a self-attention mechanism, GATs mimic the convolution operator on regular grids where an entity embedding is formed by aggregating node features from its neighbors. Thus, the resulting embeddings are context-aware which makes nodes with the same types but different graph neighborhoods distinguishable. Moreover, the embeddings produced by the GAT allow the agent to process information beyond its immediate one-hop neighborhood and assist the agent to construct longer reasoning chains. In order to produce an embedding for the question Q, we first apply a Transformer, as described in Ashish Vaswani et al., "Attention is all you need", in Advances in neural information processing systems, 2017, pp. 5998-6008, followed by a mean pooling operation.

Policies:

We denote the history of the agent up to time $t$ with the tu-ple $H_t = (H_{t-1}, A_{t-1})$ for $t \geq 1$ and $H_0 = hub$ along with $H_0 = hub$ for $t = 0$. The agent encodes its history via a multilayered LSTM, as described in Sepp Hochreiter and Jürgen Schmidhuber, "Long short-term memory", in Neural computation 9.8, 1997, pp. 1735-1780:

$$\mathrm{h}_t = \mathrm{LSTM}\left([\mathrm{a}_{t-1}, \mathcal{Q}]\right), \tag{1}$$

where $\mathrm{a}_{t-1} = [r_{t-1}, e_t] \in \mathbb{R}^{2d}$ corresponds to the vector space embedding of the previous action (or the zero vector at time $t = 0$) with $r_{t-1}$ and $e_t$ denoting the embeddings of the relation and the target entity into $\mathbb{R}^d$, respectively. Moreover, $\mathcal{Q} \in \mathbb{R}^d$ encodes the question $\mathcal{Q}$. Note that expanding the state space definitions with the histories leads to a Markov decision process. The history-dependent action distribution is given by

$$\mathrm{d}_t = \mathrm{softmax}\left(A_t\big(\mathrm{W}_2\mathrm{ReLU}\left(\mathrm{W}_1\mathrm{h}_t\right)\big)\right) \tag{2}$$

where the rows of $A_t \in \mathbb{R}^{|\mathcal{A}_{S_t}| \times d}$ contain latent representations of all admissible actions from $S_t$. The action $A_t = (r, e) \in \mathcal{A}_{S_t}$ is drawn according to

$$A_t \sim \mathrm{Categorical}\left(\mathrm{d}_t\right) \tag{3}$$

Overall T transitions are sampled according to Equation (3) resulting in a path denoted by

$$P := \left(e_c, r_1, e_2, r_2, \ldots, r_{T_1}, e_T\right).$$

Hence, T is a hyperparameter that determines the maximum path length. However, at every time step $t = 1,2,\ldots,T$, the agent can choose to remain at the current location and not extend the reasoning path. Equations (1) and (2) define a mapping from the space of histories to the space of distribution over all admissible actions. Thus, including Equation (3), they induce a stochastic policy $\pi_\theta$, where $\theta$ denotes the set of all trainable parameters in Equations (1) and (2).

Rewards and Optimization:

During training, after the agent has reached its final location, a terminal reward is assigned according to

$$R = \begin{cases} 1 & \text{if } e_T \text{ is the answer to } \mathcal{Q}. \\ 0 & \text{otherwise} \end{cases} \tag{4}$$

We employ the REINFORCE algorithm as described by Ronald J. Williams, "Simple statistical gradient-following algorithms for connectionist reinforcement learning", in Machine learning 8.3-4, 1992, pp. 229-256, to maximize the expected rewards. Thus, the agent's maximization problem is given by

$$\arg\max_{\theta} \mathbb{E}_{Q \sim \mathcal{T}} \mathbb{E}_{A_1, A_2, \ldots, A_N \sim \pi_\theta} \left[R | e_c\right] \tag{5}$$

where T denote the set of training questions. During training the first expectation in Equation (5) is substituted with the empirical average over the training set. The second expectation is approximated by the empirical average over multiple rollouts.

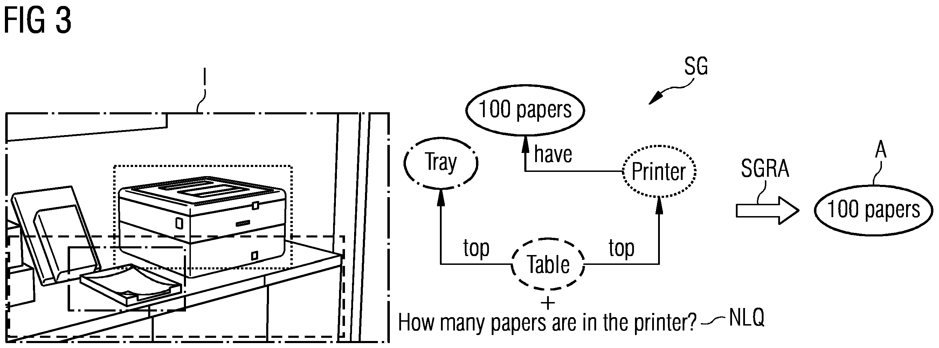

Fig. 3 shows a practical application of the described embodiments. An image I showing a printer is captured by an image sensor and used to automatically generate a scene graph SG. For a question NLQ, which is a freeform question from a user querying the number of papers, a scene graph reasoning algorithm SGRA as described above provides the correct answer A with help of visual signals. Advantageously, the scene graph reasoning algorithm SGRA is outputting a path in the scene graph SG from the hub to the answer A in order to make its reasoning transparent.

Of course, the scene graph reasoning algorithm SGRA can be applied to more sophisticated real-world settings like assembly lines due to its ability to perform reasoning on both visual and graphical data or in combination. Moreover, the nodes in the scene graph SG can be enriched with various features such as other sensor signals or technical attributes of the corresponding objects to allow reasoning over multiple data modalities.

As a result, a chatbot like system centered around visual question answering can be built that uses visual and other sensors and allows an operator to efficiently monitor industrial systems such as manufacturing facilities, gas turbines, or trains. The operator could query for certain events, a state of the equipment, or compliance with safety standards. Further, such a multi-sensor structural graph based visual question answering software can be employed to assist engineers during maintenance, besides providing integrated insights into the industrial system in real-time.

Yet another possible use case is an assistance system for visually impaired people, for whom the described visual question answering system can improve the quality of life and enable a certain degree of independence. Visually impaired people often face challenges when they need to locate and know the state of specific objects or persons in their environments. While object detection algorithms can assist in these situations, they fail to provide a helpful description of the relative location of a specific object such that the visually challenged person can navigate through the environment to reach the object.

Other applications include automatic detection and querying for building equipment, or non-invasive patients monitoring.

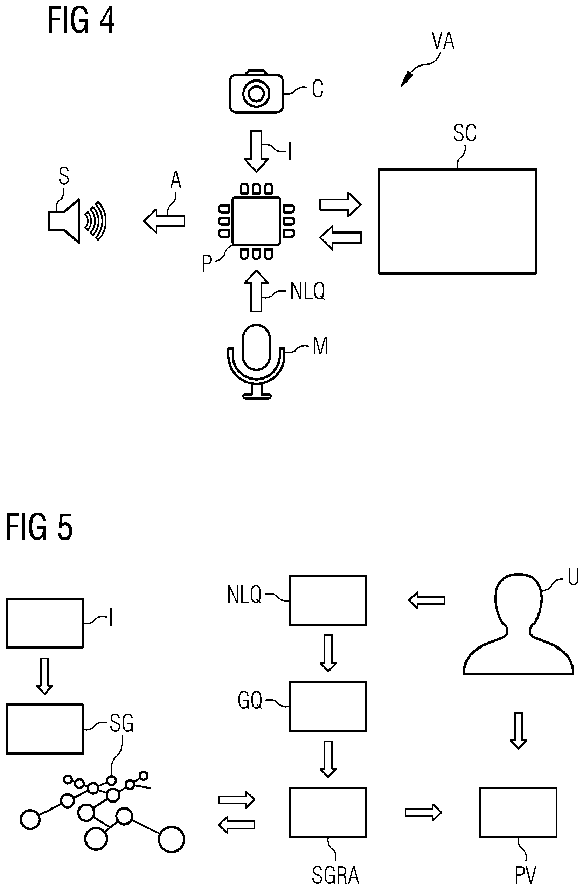

Fig. 4 shows a virtual assistant VA capable of processing voice input. The virtual assistant is executed by a processor P (either locally, or on a server/in a cloud computing environment) and connected to a camera C, which is capable of taking an image I. The processor P uses software components SC, for example an object detection algorithm, a scene graph generation algorithm, a speech recognition algorithm, a scene graph reasoning algorithm, and a path verbalizer for speech generation. The virtual assistant VA is part of a user interface that has a microphone M for receiving a question NLQ of a user in natural language, and a speaker S, for outputting an answer A to the user.

Fig. 5 shows a workflow according to an embodiment of the method. When activated the virtual assistant described in the context of Fig. 4 performs the following steps:

First, a camera takes an image I of the environment and sends the image I to a processor of the virtual assistant. Afterwards, an object detection algorithm executed by the processor automatically detects objects in the image I. A scene graph generation algorithm executed by the processor automatically generates a scene graph, wherein nodes of the scene graph correspond to detected objects. A user U activates a microphone and asks a question NLQ concerning the environment. The microphone transmits the audio signal to the processor. A speech recognition algorithm maps the question NLQ to a graph query GQ on the scene graph SG. The graph query GQ is passed to a scene graph reasoning algorithm SGRA. The scene graph reasoning algorithm SGRA extracts a path that contains the answer to the graph query GQ. The extracted path is passed to a path verbalizer PV for speech generation in order to verbalize the extracted path. An audio signal of the verbalized path is passed to a speaker and the verbalized answer is played via the speaker.

The method can be executed by a processor such as a microcontroller or a microprocessor, by an Application Specific Integrated Circuit (ASIC), by any kind of computer, including mobile computing devices such as tablet computers, smartphones or laptops, or by one or more servers in a control room or cloud. For example, a processor, controller, or integrated circuit of the computer system and/or another processor may be configured to implement the acts described herein.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1.  A method for automated visual question answering, comprising the steps of

    - automatically capturing, by an image sensor (C), an image (I),
    - automatically detecting, by an object detection algorithm executed by a processor (P), objects in the image (I),
    - automatically generating, by a scene graph generation algorithm executed by the processor (P) or another processor, a scene graph (SG), wherein nodes in the scene graph correspond to detected objects and/or attributes of detected objects,
    - receiving, by a user interface, a question (NLQ) of a user (U) in natural language,
    - automatically mapping, by the processor (P) or another processor, the question (NLQ) to a graph query (GQ) on the scene graph (SG),
    - automatically extracting, by a scene graph reasoning algorithm (SGRA) executed by the processor (P) or another processor, a path in the scene graph (SG) that contains an answer to the graph query (GQ), and
    - outputting, by the user interface, the extracted path and/or the answer to the user (U).

2.  The method according to claim 1,

    - wherein the scene graph reasoning algorithm (SGRA) has been trained with reinforcement learning.

3.  The method according to any of the preceding claims,

    - wherein the image is a still image or a moving image.

4.  The method according to any of the preceding claims,

    - wherein the image sensor is mounted in an industrial system, and
    - wherein the image sensor is monitoring the industrial system.

5.  The method according to any of the preceding claims,

    - wherein the user interface is equipped for speech recognition and/or speech generation.

6.  The method according to claim 5,

    - wherein the user interface provides a chatbot for receiving the question (NLQ) and outputting the extracted path and/or the answer in natural language.

7.  The method according to any of the preceding claims,

    - wherein the scene graph is augmented with information received from other image sensors and/or other types of sensors, in particular real-time sensors, and/or
    - wherein the scene graph is generated from images of multiple image sensors, and/or
    - wherein the scene graph is enriched with information from other sources.

8.  The method according to any of the preceding claims,

    - wherein the scene graph reasoning algorithm (SGRA) is a statistical relational learning algorithm.

9.  The method according to claim 8,

    - wherein the scene graph reasoning algorithm (SGRA) is a multi-hop method, in particular a neural multi-hop method.

10. The method according to claim 9,

    - wherein the scene graph reasoning algorithm (SGRA) is a reinforcement learning agent having been trained to autonomously navigate over the scene graph (SG) to extract the path in the scene graph (SG) that contains the answer to the graph query (GQ).

11. The method according to claim 10,

- wherein the reinforcement learning agent has been trained to conduct a policy guided random walk on the scene graph (SG) until a conclusive inference path is obtained as the path in the scene graph (SG) that contains the answer to the graph query (GQ).

12. The method according to claim 11,

- wherein the policy of the reinforcement learning agent has been trained on multiple examples consisting of images, questions, and answers to the questions, and
- wherein during training, the reinforcement learning agent has received a positive reward when it was able to locate a correct answer node in a scene graph, and otherwise a negative reward.

13. The method according to any of the preceding claims,

- wherein a state and actions of the scene graph reasoning algorithm (SGRA) are represented by embedding the question (NLQ) as well as the nodes and their relations in the scene graph (SG) into vector spaces with d dimension,
- wherein the embedded question is the graph query (GQ),
- wherein in particular, words in the question (NLQ) and nodes and relations in the scene graph (SG) are initialized with GloVe embeddings and graph attention networks are used to produce the final embeddings, and
- wherein in particular, mapping the question (NLQ) to the graph query (GQ) begins with applying a Transformer and then a mean pooling operation.

14. A system for automated visual question answering, capable of executing the method according to any of the preceding claims and comprising

- the processor (P),
- a computer-readable medium storing software components (SC), including the object detection algorithm, the scene graph generation algorithm, and the scene graph reasoning algorithm (SGRA),
- an image sensor (C), which is capable of capturing the image (I), and
- the user interface.

15. The system according to claim 14,

- wherein the user interface comprises

- a microphone (M), capable of receiving the question (NLQ) of the user (U) in natural language, and
- a speaker (S), capable of outputting the extracted path and/or the answer to the user (U), and

- wherein the software components (SC) also include a speech recognition algorithm and a speech generation algorithm.

16. Computer-readable storage media having stored thereon:

- instructions executable by one or more processors of a computer system, wherein execution of the instructions causes the computer system to perform the method according to one of the claims 1 to 13.

17. Computer program,

- which is being executed by one or more processors of a computer system and performs the method according to one of the claims 1 to 13.

FIG 1

# FIG 2

FIG 3

## FIG 4

## FIG 5

Europäisches
Patentamt

European
Patent Office

Office européen
des brevets

# EUROPEAN SEARCH REPORT

Application Number

EP 20 17 7857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAURILET MONICA ET AL: "It's Not About the Journey; It's About the Destination: Following Soft Paths Under Question-Guidance for Visual Reasoning", 2019 IEEE/CVF CONFERENCE ON COMPUTER VISION AND PATTERN RECOGNITION (CVPR), IEEE, 15 June 2019 (2019-06-15), pages 1930-1939, XP033686558, DOI: 10.1109/CVPR.2019.00203 [retrieved on 2020-01-08] * Sections 1-4 * | 1-17 | INV. G06F16/583 G06K9/00 G06K9/46 |
| A | CN 110 110 043 A (UNIV SUN YAT SEN) 9 August 2019 (2019-08-09) * the whole document * | 1-17 | |
| A | CN 110 399 518 A (UNIV HANGZHOU DIANZI) 1 November 2019 (2019-11-01) * the whole document * | 1-17 | |
| | | | TECHNICAL FIELDS SEARCHED (IPC) |
| | | | G06F G06K |

The present search report has been drawn up for all claims

| Place of search | Date of completion of the search | Examiner |
|---|---|---|
| The Hague | 20 October 2020 | Targon, Valerio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 7857

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2020

| Patent document cited in search report | | Publication date | Patent family member(s) | Publication date |
|---|---|---|---|---|
| CN 110110043 | A | 09-08-2019 | NONE | |
| CN 110399518 | A | 01-11-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIASEN LU et al.** Hierarchical question - image co-attention for visual question answering. *Advances in neural information processing systems,* 2016
- **DAMIEN TENEY ; LIU LINGQIAO ; ANTON VAN DEN HENGEL.** Graph-structured representations for visual question answering. *Proceedings of the IEEE Conference on Computer Vision and Pattern Recognition,* 2017
- **MAXIMILIAN NICKEL et al.** A review of relational machine learning for knowledge graphs. *Proceedings of the IEEE,* 2015, vol. 104.1, 11-33
- **RAJARSHI DAS et al.** Go for a Walk and Arrive at the Answer: Reasoning Over Paths in Knowledge Bases using Reinforcement Learning. *ICLR,* 2018
- DeepPath: A Reinforcement Learning Method for Knowledge Graph Reasoning. **WENHAN XIONG ; THIEN HOANG ; WILLIAM YANG WANG.** Proceedings of the 2017 Conference on Empirical Methods in Natural Language Processing (EMNLP 2017). ACL, September 2017
- **KAIMING HE ; GEORGIA GKIOXARI ; PIOTR DOLLAR ; ROSS GIRSHICK.** Mask R-CNN. *Proceedings of the IEEE international conference on computer vision,* 2017, 2961-2969

- **THOMAS N. KIPF ; MAX WELLING.** Semi-supervised classification with graph convolutional networks. *arXiv,* 2016
- **RAJAT KONER ; POULAMI SINHAMAHAPATRA ; VOLKER TRESP.** Relation Transformer Network. *arXiv,* 2020
- **RONALD J. WILLIAMS.** Simple statistical gradient-following algorithms for connectionist reinforcement learning. *Machine learning,* 1992, vol. 8.3-4, 229-256
- **JEFFREY PENNINGTON ; RICHARD SOCHER ; CHRISTOPHER D. MANNING.** GloVe: Global Vectors for Word Representation. *Empirical Methods in Natural Language Processing (EMNLP),* 2014, 1532-1543
- **PETAR VELIČKOVIC et al.** Graph attention networks. *arXiv,* 2017
- **ASHISH VASWANI et al.** Attention is all you need. *Advances in neural information processing systems,* 2017, 5998-6008
- **SEPP HOCHREITER ; JÜRGEN SCHMIDHUBER.** Long short-term memory. *Neural computation,* 1997, vol. 9.8, 1735-1780
- **RONALD J. WILLIAMS.** Simple statistical gradient-following algorithms for connectionist reinforcement learning. *Machine learning,* 1992, vol. 8.3-4, 229-256